# EUROPÄISCHE PATENTSCHRIFT

(11) **EP 2 265 084 B1**
(45) Veröffentlichungstag und Bekanntmachung des Hinweises auf die Patenterteilung: **25.02.2015**
(21) Anmeldenummer: 10181399.6
(22) Anmeldetag: 07.09.1996
(51) Int. Cl.: H04W 88/18, H04W 36/08

(54) **Verfahren zum Übertragen von Daten**
Process for transmitting data, in particular GSM data
Procédé de transmission de données, notamment des données GSM

(30) Priorität: 29.11.1995 DE 19544367
(43) Veröffentlichungstag der Anmeldung: 22.12.2010
(62) Teilanmeldung aus: 03004652.8
(73) Patentinhaber: IPCom GmbH & Co. KG, 82049 Pullach (DE)
(72) Erfinder: Mayer, Ralf, 71546 Aspach (DE)
(74) Vertreter: Gigerich, Jan

(56) Entgegenhaltungen:
- EP-A2- 0 332 345
- WO-A1-95/08237
- WO-A1-96/32823
- BOSCH TELECOM AND DETEMOBIL ED - BOSCH TELECOM AND DETEMOBIL: "Proposal for a tandem free operation (TFO) of speech codecs in MS to MS calls using inband signalling", ETSI/SMG/SMG2/SEG, TAMPERE (FI), 27. November 1995 (1995-11-27), Seiten p.1-4, XP002689003,

## Beschreibung

Die Erfindung betrifft ein Verfahren zum Übertragen von Daten, insbesondere GSM-Daten zwischen mindestens zwei Teilnehmern.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN - Public Switched Telephone Network), wurden die GSM-Daten in GSM-Format in das Rahmenformat des Kommunikationsnetzes - 64 kbit/s PCM bei PSTN - mittels einer Umcodiereinrichtung/einem Transcoder umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 0660/0861 erfolgt die digitale Sprachübertragung in sogenannten "TRAU-frames" (transcode and rate adaptor unit); d. h. Übertragungsrahmen im 16 kbit/s-Format bei FR (Full Rate) Übertragung und 8 kbit/s oder auch 16 kbit/s bei HR (Half Rate) Übertragung.

Aus der US 5,091,945 ist es bekannt, anstelle von Sprachdaten nur Signalparameter (Sprachparameter) zu übertragen, aus denen die Nutzdaten wieder rekonstruiert werden können.

Aus der EP-A-A-0 332 345 ist es bekannt, die Übertragung von Sprachabtastwerten in einem ersten Datenstrom und die Übertragung von Synchronisationsmuster durchzuführen.

Aus der nach dem Prioritätsdatum der vorliegenden Anmeldung veröffentlichten internationalen Patentanmeldung WO 96/23297 ist es bekannt, die Übertragung von Sprachabtastwerten in einem ersten Datenstrom und die Übertragung von Kennungsinformationen sowie von Sprachparametern zur Sprachdatenrekonstruktion in einem zweiten Datenstrom durchzuführen. Ein wesentlicher Nachteil des in WO 96/23297 offenbarten Datenübertragungsverfahrens besteht darin, dass die Kennungsinformationen permanent übertragen werden. Die WO 96/23297 entspricht der europäischen Patentanmeldung EP 806 032 und ist nur gemäß Art. 54 (3) EPÜ möglicherweise von Bedeutung.

### Vorteile der Erfindung

Das erfindungsgemäße Verfahren mit den Merkmalen des Hauptanspruchs hat demgegenüber den Vorteil, dass es bei Signalisierung einer einem rufenden Teilnehmer zugeordneten TFO-fähigen Umcodiereinrichtung (TCE1) zu einer einem rufenden Teilnehmer zugeordneten TFO-fähigen Umcodiereinrichtung (TCE2) sowie bei der Verwendung einer Kennungsinformation in der ersten Umcodiereinrichtung (TCE1) folgende Maßnahmen vorsieht:
Der Datenstrom zwischen den Umcodiereinrichtungen (TCE1, TCE2) wird unterteilt in einen ersten Datenstrom mit Sprachabtastwerten zur Übertragung und in einen zweiten Datenstrom mit Signalparametern zur Sprachdatenrekonstruktion, insbesondere TRAU-Rahmen,
   wobei die so unterteilten Datenströme während einer Verbindungsaufbauphase gleichzeitig übertragen werden,
   wobei zu einem Verbindungsaufbau zwischen den Teilnehmern (TI1, TI2) für eine vorgegebene Zeitdauer (T_{sync}) eine Kennungsinformation (TRAU*) von der ersten Umcodiereinrichtung (TCE1) gesendet wird und wobei die erste Umcodiereinrichtung (TCE1) in den Normalbetrieb zurückfällt, wenn sie vor Ablauf der vorgegebenen Zeitdauer (T_{sync}) keine Kennungsinformation (TRAU*) von der zweiten Umcodiereinrichtung (TCE2) empfängt, wobei in dem Normalbetrieb die Sprachabtastwerte codiert bzw. decodiert werden,
   wobei die Kennungsinformation (TRAU*) nicht die TRAU-Rahmen-Synchronisationsinformation mit umfasst.

Besonders vorteilhaft ist es, dass sich eine Verbesserung der Qualität übertragener Daten, insbesondere von GSM-Sprachdaten, insbesondere bei Tandembetrieb bei Verbindungen zwischen mobilen Teilnehmern ergibt. Durch die gleichzeitige Übertragung von Abtastwerten, z. B. PCM-Werten, und Signalparametern zur Sprachdatenrekonstruktion sind die Störungen bei einer

Transcodiereinrichtung, die nicht für den tandemfreien Betrieb mit transparenter Durchschaltung von TRAU-Rahmen ausgestattet ist, geringer. Denn es werden auch bei der Übertragung von Kennungsinformationen immer noch Sprachdaten im ersten Datenstrom übertragen.

Auch bei Handover-Betrieb bietet die Erfindung Vorteile. Die Erfindung ist einfach in bestehende Systeme zu implementieren. Nur die Sprach-Transcoder eines Netzes sind betroffen. Beispielsweise werden von den 8 Bits pro Sprachabtastwert die beiden niedrigwertigsten Bits durch einen TRAU-Rahmen ersetzt (die Sprache wird dann auf 6 Bits reduziert), in welchem Kennungsinformation/Synchroninformation eingeblendet werden kann, um die Transcodiereinrichtungen aufeinander zu synchronisieren.

Durch Klemmung der niedrigwertigsten Bits auf Null bei der Übertragung von Sprachabtastwerten während eines Gesprächsaufbaus ist die Sprachqualität gegenüber bisher vorgeschlagenen Verfahren verbessert.

Bei einem Handover, d. h. bei einem Wechsel auf eine andere Transcodiereinrichtung, kann ein Rahmenverlust schnell festgestellt werden, bzw. vermieden werden, dass ungültige Rahmen als TRAU-Rahmen weiterverarbeitet werden. Eine nicht zum tandemfreien Betrieb ausgestattete Transcodiereinrichtung kann während eines Synchronisationsvorganges schon Sprachabtastwerte verarbeiten. Wenn nach abgeschlossener Synchronisation anstelle der Abtastwerte ein reduziertes Ruhemuster gesendet wird, kann der Sprachdecoder der Transcodiereinrichtung abgeschaltet werden oder für andere Zwecke, z. B. zur Codeumsetzung Full Rate/Half Rate im Downlink-Pfad verwendet werden.

### Zeichnungen

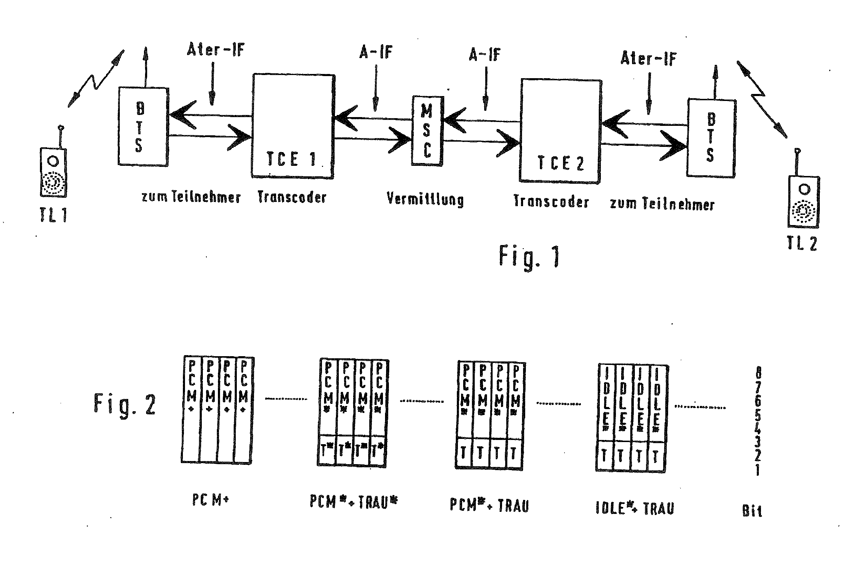

Figur 1 zeigt den Aufbau einer Verbindung zwischen zwei Teilnehmern,
Figur 2 die Daten einer Übertragungsschnittsstelle in zeitlicher Abfolge,
Figur 3 die in Figur 2 verwendeten Muster.
Figur 4 den Handover-Betrieb.

### Beschreibung der Ausführungsbeispiele

Im bestehenden GSM-Netz (Festnetzseite), beispielsweise dem DMCS 900 Netz, wird eine Transcodierung; d. h. eine Umcodierung der Sprachdaten vom vorgegebenen sogenannten TRAU (Transcode and Rate Adaption Unit)-Format nach der GSM-Recommendation 08.60 in das Übertragungsformat des Kommunikationsnetzes, z. B. dem öffentlichen Fernsprechnetz PSTN (PCM-Werte im 64 kbit/s Rahmenformat), stets vorgenommen.

Vom Teilnehmer T11 wird eine Verbindung zum Teilnehmer T12 geschaltet. Die Transcodiereinrichtung, nachfolgend stets Transcoder genannt, TCE1, die dem Teilnehmer T11 zugeordnet ist, sendet im Verkehrskanal des A-Interfaces A-IF eine Kennungsinformation, welche dem zugeschalteten Transcoder TCE2 (Tandem-) signalisiert, daß es sich um eine TFO(tandem free operation)-fähige Transcodiereinrichtung handelt. Die beiden Transcoder schalten, nachdem sie diese Signalisierung erkannt haben, in den TFO-Betrieb und tauschen die Sprachparameter aus. Trifft der Transcoder auf einen nicht TFO-fähigen Transcoder, so erhält dieser die Kennung der Gegenstelle innerhalb einer gewissen Zeit nicht und fällt daher wieder in den normalen Betrieb zurück, in welchem er die Sprache (Sprachabtastwerte) codiert bzw. decodiert.

Die Interfaces von den Transcodern TCE1, TCE2 zu den Teilnehmern T11, T12, die z. B. über Funkfeststationen BTS anschaltbar sind, sind mit ATER-IF bezeichnet. Die Vermittlung zwischen den Transcodiereinrichtungen ist mit MSC bezeichnet.

### Gesprächsaufbau

Beim Gesprächsaufbau stellt die Detektion des Übergangs am A-Interface (A-IF) in den unteren (niedrigwertigsten) beiden Bits der A-Abtastwerte von 00 auf ≠00 den Trigger dar. Der Trigger ist ggf. um Trigger verzögert.

Diese Triggerbedingung ist dabei so gewählt, dass sie folgendem Verhalten der Vermittlungseinrichtung MSC genügt:
a) Die MSC sendet einem nichtbelegten Transcoder ein IDLE-Muster (Ruhemuster).
b) Die MSC schaltet beim Verbindungsaufbau zunächst eine Schleife zwischen Eingang und Ausgang der Leitung zum Transcoder bevor sie durchschaltet.
c) Die MSC schaltet die beiden Richtungen unterschiedlich schnell durch. Dies kann mit T_{trigger} ausgeglichen werden.

### Arbitrierungs-Vorgang

Der Transcoder TCE1 sendet am A-IF Interface anstelle der üblichen 8 Bit-PCM-Abtastwerte nun in den niedrigwertigsten 2 Bits dieser Abtastwerte einen TRAU-Rahmen (dieser wurde bisher zur Übertragung zwischen Funkstation und Transcoder verwendet und enthält Signalparameter zur Nutzdatenrekonstruktion). Der Datenstrom zwischen den Transcodern TCE1 und TCE2 ist demnach unterteilt in einen ersten Datenstrom mit Abtastwerten (PCM-Werten) und einen zweiten Datenstrom mit Signalparametern insbesondere TRAU-Rahmen. Beide Datenströme werden insbesondere während einer Verbindungsaufbauphase gleichzeitig übertragen. In einem solchen TRAU-Rahmen wird für eine vorgegebene Zeitdauer eine Kennungsinformation TRAU* gesendet. Sobald der TRAU* von der Gegenstelle erkannt wurde, wird in den TFO-Betrieb geschaltet. Der Vorgang wird von einem Timer T_{sync} überwacht. Läuft dieser ab, wird in den normalen Betrieb übergegangen.

Alternativ können auch n, n<9 Bits für die Signalisierung verwendet werden mit beliebigen Rahmenstrukturen.

Alternativ kann auf die Kennungsinformation TRAU* verzichtet werden und lediglich die TRAU-Rahmen-Synchronisationsinformation herangezogen werden.

Solange die Synchronisation T_{sync} läuft, werden im Anschluss an die Kennungsinformation TRAU* die vom Aₜₑᵣ-IF ankommenden TRAU-Rahmen in den niedrigwertigen 2 Bits des A-IF gesendet. Dies ermöglicht bei der Gegenstelle einen sofortigen Übergang in den TFO-Betrieb nach dem Erhalt von der Kennungsinformation TRAU*. Die höherwertigen 6 Bits der Abtastwerte werden mit den prozessierten höherwertigen 6 Bits PCM* gefüllt. Dies reduziert den Qualitätsverlust, falls die Gegenstelle kein TFO-fähiger Transcoder ist.

Wird innerhalb einer Wiederholungszeit Tᵣₑₚₑₐₜ (Tᵣₑₚₑₐₜ < T_{sync}) kein TRAU* empfangen, wird nochmals ein TRAU* gesendet. Der Zweck dieses zweiten TRAU* ist im Handover-Fall beschrieben.

### TFO-Betrieb (tandemfreier Betrieb)

Nach dem Erkennen des TRAU* am A-IF werden im Anschluß daran die folgenden TRAU Rahmen(-Inhalte) zum Aₜₑᵣ-IF durchgereicht. Die Anpassung der ControlBits sowie das Timing des Aₜₑᵣ-TRAU-Rahmens wird den lokalen Gegebenheiten angepaßt. Unbrauchbare Rahmen von der Gegenstelle (BFI=1, TRAU*) werden durch den vorherigen Rahmen ersetzt und ggf. ein Muting eingeleitet. Ein evtl. Jitter in der TRAU-Rahmenlänge von +/-2Bits muß ebenfalls ausgeglichen werden. Codec-Umsetzungen, DTX und Muting-Funktionen werden ebenfalls in dieser Richtung durchgeführt. Vorteil ist, daß keine Signalisierung im Gespräch erforderlich ist, falls sich die lokalen Gegebenheiten ändern.

In die Gegenrichtung werden TRAU-Rahmen vom Aₜₑᵣ-IF zum A-IF transparent durchgereicht. Die oberen 6 Bits werden anstelle von PCM* nun durch IDLE* (010101) ersetzt. Dies ermöglicht die Abschaltung der Transcodier-Funktion, da diese Kapazität in einer FR/HR-Systemumgebung ggf. für die HRC <-> FRC Umsetzung benötigt wird. Es vermeidet ebenfalls eine zusätzliche Laufzeit. TRAU-Rahmen mit DatenInhalt können ebenfalls transparent durchgereicht werden.

Anstelle von IDLE* kann auch ein Modulo-n Zähler eingebaut werden, welcher eine noch sicherere Fehlerdetektion erlaubt.

### Handover

Der Handover-Fall ist in die drei nachfolgend beschriebenen Fälle zu untergliedern.

### a) Handover zu einem TFO-fähigen Transcoder

Zunächst wird der Abbruch der ankommenden TRAU-Rahmen registriert und ein Timer Tᵣₑₗₑₐₛₑ gestartet. Der Transcoder empfängt nach einer gewissen Zeit wieder einen TRAU* von dem neu zugeschalteten Transcoder TCE3, stoppt Tᵣₑₗₑₐₛₑ, sendet selbst einen TRAU* und bleibt im TFO-Betrieb. So kann der Transcoder ständig im TFO-Betrieb bleiben.

Kann der erste TRAU* nicht empfangen werden, da die Vermittlung MSC noch nicht durchgeschaltet hat, wird dessen zweiter TRAU* jedoch detektiert und führt zum TFO-Betrieb.

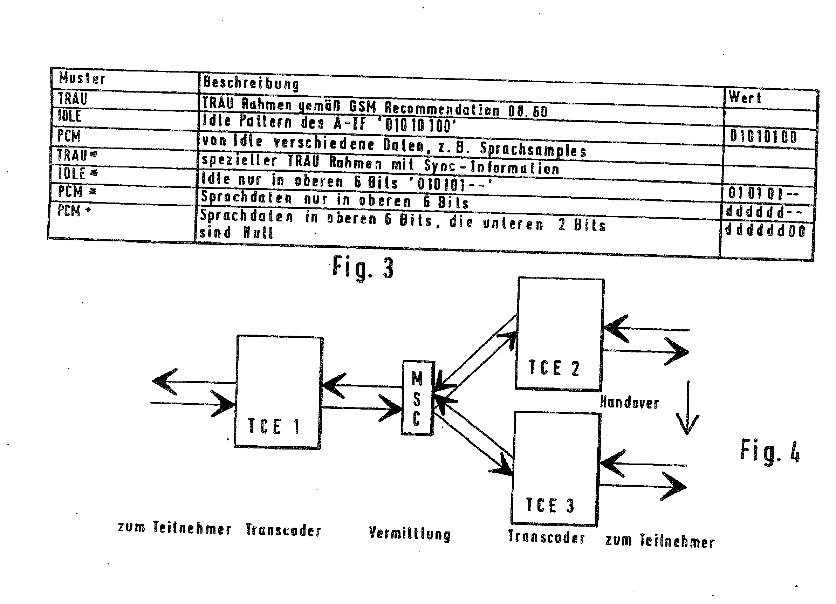

Um möglichst schnell den Handover vom Transcoder TCE2 zum Transcoder TCE3 zu detektieren und um ggf. auf eine Schleife am A-IF nicht zu triggern, wird der neu zugeschaltete Transcoder TCE3 (Fig. 4) beim Gesprächsaufbau "PCM+" senden. "PCM+" sind die PCM-Daten mit den unteren 2 Bits auf '00', um nicht TRAU-Sync-Bits vorzutäuschen. Dies ermöglicht, Störungen beim Teilnehmer zu unterdrücken.

### b) Handover zu einem nicht TFO-fähigen Transcoder

Zunächst wird der Abbruch der ankommenden TRAU-Rahmen registriert und ein Timer Tᵣₑₗₑₐₛₑ gestartet. Der Timer Tᵣₑₗₑₐₛₑ läuft ab und der Transcoder geht wieder in den Arbitrierungszustand, in welchem er die ankommenden Daten am A-IF encodiert. In den abgehenden Datenstrom am A-IF fügt er zu den TRAU-Rahmen nun decodierte PCM-Samples "PCM*" ein. Der zuerst gesendete TRAU ist ein TRAU*. Der Timer T_{sync} wird gestartet. Da vor Ablauf des Timers T_{sync} kein TRAU* empfangen wurde, wird in den normalen Betrieb zurückgefallen.

### c) Handover von einem nicht TFO-fähigen Transcoder

War die bisherige Gegenstelle nicht TFO-fähig, kann der Transcoder den Handover nicht erkennen. Fur die neue Gegenstelle ist es jedoch ein normaler Gesprächsaufbau, in welchem sie, falls sie TFO-fähig ist, zuerst einen TRAU* sendet. Diesen empfängt der Transcoder, sendet ebenfalls einen TRAU* und geht in den TFO-Betrieb. Erfolgt die Durchschaltung verzögert, geht der erste TRAU* verloren und der zweite TRAU* nach Tᵣₑₚₑₐₜ führt zum Erfolg.

### Gesprächsabbruch

Das Gesprächsende wird entweder durch den Abbruch der TRAU-Rahmen am Aₜₑᵣ-IF, oder durch detektierte Fehler am A-IF eingeleitet. Der Ablauf ist dann wie im Falle 'Handover zu einem nicht TFO-fähigen Transcoder'.

### verhalten bei Fehlern im TFO-Betrieb

### a) Einzel-Fehler am A-IF

Einzel-Fehler können nicht in den Datenbits der TRAU-Rahmen erkannt werden. Einzel-Fehler können nur in den Synchronisationsbits der TRAU-Rahmen erkannt werden. Maßnahmen sind deshalb daraus keine abzuleiten, da keine Aussage über die Datenbits des TRAU-Rahmens gegeben ist.

### b) Burst-Fehler am A-IF

Stark gestörte TRAU-Rahmen ans Ater-IF weiterzuleiten bedeutet, daß evtl. starke Störgeräusche beim Teilnehmer auftreten können. Daher wird bei Detektion eines einzelnen Fehlers von einem Burst-Fehler ausgegangen, der restliche TRAU-Rahmen verworfen und durch den zuvor gesendeten TRAU-Rahmen ersetzt. Folgende Maßnahmen vermeiden diese Störungen weitestgehend:
1. Doppelte Fehlerüberwachung:
   1.1 durch die Kontrolle der (TRAU-)Rahmen Synchronisation
   1.2 durch die Kontrolle des IDLE*-Musters in den oberen 6 Bits
   zu 1.2 Alternativ; Kontrolle über ein periodisches Muster, beispielsweise eines Modulo-n Zählers, dessen Zählerzustände innerhalb des ersten Datenstromes übertragen werden.
2. Fehlerverschleierungs-Puffer
   Ein Puffer mit ca. x ms (hier 5 ms) erlaubt die Daten bis zum letzten TRAU Sync-Bit zu speichern und im Fehlerfall durch die zuletzt gültigen Daten zu substituieren.

Ist der Burst sehr lang, wird wie im Fall 'Handover zu einem nicht TFO-fähigen Transcoder', in den normalen Betrieb übergegangen.

Bevorzugte Beispiele der vorliegenden Erfindung ergeben sich aus den folgenden Aspekten:
1. Verfahren zum Übertragen von digitalisierten Daten zwischen einer rufenden und einer gerufenen Teilnehmereinheit (TI1, TI2) eines Mobilfunknetzes, wobei für das Übertragen ein vorgegebenes Rahmenformat verwendet wird, mit folgenden Maßnahmen:
   - Schalten einer Verbindung zwischen den Teilnehmereinheiten (TI1, TI2);
   - Signalisieren durch eine erste Transkodiereinrichtung (TCE1), die der rufenden Teilnehmereinheit (TI1) zugeordnet ist, einer zweiten Transkodiereinrichtung (TCE2), die der gerufenen Teilnehmereinheit (TI2) zugeordnet ist, dass es sich bei der ersten Transkodiereinrichtung (TCE1) um eine TFO (Tandemfrei-Betrieb)- fähige Transkodiereinrichtung handelt, wobei das Signalisieren für eine vorgegebene maximale Zeitdauer stattfindet;
   - Umschalten der beiden Transkodiereinrichtungen (TCE1, TCE2), nachdem sie die obengenannte Signalisierung erkannt haben, in einen TFO- Betrieb; und
   - Austauschen von Sprachparametern zwischen den Transkodiereinrichtungen (TCE1, TCE2);
      wobei der Datenstrom zwischen den Transkodiereinrichtungen (TCE1, TCE2), die den Teilnehmereinheiten (TI1, T12) zugeordnet sind, sowohl während der Zeitphase der Signalisierung, als auch während der Zeitphase des Austausches von Sprachparametern in einen ersten Datenstrom mit Sprachabtastwerten und in einen zweiten Datenstrom unterteilt wird; und
      wobei der zweite Datenstrom während der Zeitphase der Signalisierung Kennungsinformationen und während der Zeitphase des Austausches Sprachparameter zur Sprachdatenrekonstruktion enthält.
2. Verfahren nach Aspekt 1, **dadurch gekennzeichnet, dass** für die Signalparameter des zweiten Datenstroms die für Mobilfunksysteme bekannten TRAU (Transcoding rate adaption unit) -Rahmen verwendet werden.
3. Verfahren nach Aspekt 1 oder 2, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.
4. Verfahren nach Aspekt 3, **dadurch gekennzeichnet, dass** der zweite Datenstrom durch Reduktion der Daten des ersten Datenstromes gebildet wird.
5. Verfahren nach Aspekt 3 oder 4, **dadurch gekennzeichnet, dass** die höherwertigen Bits als PCM-Abtastwerte übertragen werden.
6. Verfahren nach einem der Aspekte 1 bis 5, **dadurch gekennzeichnet, dass** die zweite Transkodiereinrichtung (TCE2) der ersten Transkodiereinrichtung (TCE1) signalisiert, dass es sich bei der zweiten Transkodiereinrichtung (TCE2) um eine TFO-fähige Transkodiereinrichtung handelt, nachdem die zweite Transkodiereinrichtung (TCE2) von der ersten Transkodiereinrichtung (TCE1) die Kennungsinformationen empfangen hat.
7. Verfahren nach einem der Aspekte 1 bis 6, **dadurch gekennzeichnet, dass** die Kennungsinformationen nach einem Übergang in den TFO-Betrieb eingebettet in TRAU-Rahmen zwischen den Transkodiereinrichtungen (TCE1, TCE2) übertragen werden.
8. Verfahren nach einem der Aspekte 1 bis 7, **dadurch gekennzeichnet, dass** unmittelbar nach dem Aussenden der Kennungsinformationen die Signalparameter im TRAU-Rahmen gesendet werden.
9. Verfahren nach einem der Aspekte 1 bis 8, **dadurch gekennzeichnet, dass** aus dem TFO-Betrieb zwischen den Transkodiereinrichtungen (TCE1, TCE2) ein Handover zu einer anderen TFO-fähigen oder zu einer nicht TFO-fähigen Transkodiereinrichtung ermöglicht wird.

## Patentansprüche

1. Verfahren zum Übertragen von Daten zwischen einem rufenden Teilnehmer (TL1), dem eine erste Umcodiereinrichtung (TCE1) zugeordnet ist, und einem gerufenen Teilnehmer (TL2), dem eine zweite Umcodiereinrichtung (TCE2) zugeordnet ist,
wobei für das Übertragen ein vorgegebenes Rahmenformat verwendet wird mit folgenden Maßnahmen:
Der Datenstrom zwischen den Umcodiereinrichtungen (TCE1, TCE2) wird unterteilt in einen ersten Datenstrom mit Sprachabtastwerten zur Übertragung und in einen zweiten Datenstrom mit Signalparametern zur Sprachdatenrekonstruktion, insbesondere TRAU-Rahmen,
wobei die so unterteilten Datenströme während einer Verbindungsaufbauphase gleichzeitig übertragen werden,
wobei zu einem Verbindungsaufbau zwischen den Teilnehmern (TL1, TL2) für eine vorgegebene Zeitdauer, T_{sync}, eine Kennungsinformation (TRAU*) von der ersten Umcodiereinrichtung (TCE1) gesendet wird und wobei die erste Umcodiereinrichtung (TCE1) in den Normalbetrieb zurückfällt, wenn sie vor Ablauf der vorgegebenen Zeitdauer (T_{sync}) keine Kennungsinformation (TRAU*) von der zweiten Umcodiereinrichtung (TCE2) empfängt, wobei in dem Normalbetrieb die Sprachabtastwerte codiert bzw. decodiert werden,
wobei die Kennungsinformation (TRAU*) keine TRAU-Rahmen-Synchronisationsinformation mit umfasst.

2. Verfahren nach Anspruch 1, **dadurch gekennzeichnet, dass** für die Signalparameter die für Mobilfunksysteme bekannten TRAU -Rahmen verwendet werden.

3. Verfahren nach Anspruch 1 oder 2, **dadurch gekennzeichnet, dass** in dem zweiten Datenstrom Signalparameter zur Nutzdatenrekonstruktion und/oder zur Signalisierung übertragen werden.

4. Verfahren nach Anspruch 3, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.

5. Verfahren nach Anspruch 4, **dadurch gekennzeichnet, dass** der zweite Datenstrom durch Reduktion der Daten des ersten Datenstromes gebildet wird.

6. Verfahren nach Anspruch 4 oder 5, **dadurch gekennzeichnet, dass** die höherwertigen Bits als PCM-Abtastwerte übertragen werden.

7. Verfahren nach einem der Ansprüche 1 bis 6, **dadurch gekennzeichnet, dass** zwischen den Teilnehmern (TI1, TI2) anstelle der Signalparameter eine Kennungsinformation (TRAU*) gesendet wird.

8. Verfahren nach einem der Ansprüche 3 bis 7, **dadurch gekennzeichnet, dass** in einer Zeitphase eines Verbindungsaufbaus nur die Abtastwerte gesendet werden und anstelle der Signalparameter Nullfolgen eingeblendet werden.

9. Verfahren nach Anspruch 8, **dadurch gekennzeichnet, dass** die Nullfolgen zeitlich vor der Kennungsinformation (TRAU*) eingeblendet werden.

10. Verfahren nach einem der Ansprüche 1 bis 9, **dadurch gekennzeichnet, dass** unmittelbar nach dem Aussenden der Kennungsinformation (TRAU*) die Signalparameter im TRAU-Rahmen gesendet werden.

11. Verfahren nach einem der vorherigen Ansprüche **dadurch gekennzeichnet, dass** nach den Übergang in den tandemfreien Übertragungsmode anstelle der zu codierenden Abtastwerte ein periodisches Ruhemuster (IDLE*) gesendet wird.

12. Verfahren nach einem der Ansprüche 7 bis 11, **dadurch gekennzeichnet, dass** der Abbruch einer Verbindung oder ein Übertragungsfehler durch Detektion der TRAU-Rahmen-Synchronisierungsinformation und/oder durch Kontrolle des periodischen Ruhemusters (IDLE*) registriert wird.

13. Verfahren nach einem der Ansprüche 2 bis 10, **dadurch gekennzeichnet, dass** der Abbruch einer Verbindung oder ein Übertragungsfehler durch Detektion der TRAU-Rahmen-Synchronisierungsinformation und/oder durch Auswertung eines periodischen Musters der Information eines Modulo-n Zählers, dessen Zählerzustände innerhalb des ersten Datenstromes übertragen werden, registriert wird.

14. Verfahren nach einem der Ansprüche 11 bis 13, **dadurch gekennzeichnet, dass** beim Verbindungsaufbau der zweite Datenstrom daraufhin überwacht wird, ob anstelle der Nullfolgen andere Bitkombinationen eintreffen, dass aus dieser Überwachung ein Triggersignal abgeleitet wird, das - ggf. nach einer Verzögerung - mittels einer zwischen den Umcodiereinrichtungen (TCE1, TCE2) befindlichen Vermittlungseinrichtung (MSC) zu folgender Arbeitsweise führt:
- die Vermittlungseinrichtung (MSC) sendet bei einer nicht belegten Transcodiereinrichtung (TCR1, TCR2) das Ruhemuster (IDLE*),
- die Vermittlungseinrichtung (MSC) schaltet ggf. beim Verbindungsaufbau zunächst eine Schleife zwischen dem Eingang und dem Ausgang der Leitung zur Umcodiereinrichtung (TCE1, TCE2) bevor sie durchschaltet,
- wenn die Vermittlungseinrichtung (MSC) in beiden Richtungen unterschiedlich schnell durchschaltet, wird dies mit dem Triggersignal ausgeglichen.

15. Verfahren nach einem der Ansprüche 11 bis 13, **dadurch gekennzeichnet, dass** fehlerhafte TRAU-Rahmen von der Gegenstelle durch vorherige TRAU-Rahmen ersetzt werden und ggf. ein Muting eingeleitet wird.

16. Verfahren nach einem der Ansprüche 12 bis 15, **dadurch gekennzeichnet, dass** bei Abbruch einer Verbindung ein Zähler, Timer Tᵣₑₗₑₐₛₑ, gesetzt wird, dass im Falle des Empfangs einer Kennungsinformation (TRAU*) innerhalb einer vorgegebenen Zählzeit, Tᵣₑₗₑₐₛₑ, von einer neu zugeschalteten Umcodiereinrichtung (TCE3) der tandemfreie Übertragungsmode aufrechterhalten wird, dass bei Nichtempfang dieser Kennungsinformation (TRAU*) eine weitere Kennungsinformation (TRAU*) gesendet wird und der tandemfreie Übertragungsmode bei fehlender Synchronisation abgebrochen wird.

17. Verfahren nach einem der Ansprüche 12 bis 16, **dadurch gekennzeichnet, dass** die jeweils zuletzt gesendeten Daten zwischengespeichert werden und zu einer Fehlerverschleierung fehlerhafte Daten ersetzen.

## Claims

1. Method for transmitting data between a calling subscriber (TL1), which has an associated first recoding device (TCE1), and a called subscriber (TL2), which has an associated second recoding device (TCE2),
wherein a prescribed frame format is used for the transmission, having the following measures:
the data stream between the recoding devices (TCE1, TCE2) is divided into a first data stream with voice samples for transmission and into a second data stream with signal parameters for voice data reconstruction, particularly TRAU frames,
wherein the data streams divided in this manner are transmitted simultaneously during a connection set-up phase,
wherein connection set-up between the subscribers (TL1, TL2) involves a piece of identifier information (TRAU*) being sent by the first recoding device (TCE1) for a prescribed period of time, T_{sync}, and wherein the first recoding device (TCE1) reverts to the normal mode if it does not receive a piece of identifier information (TRAU*) from the second recoding device (TCE2) before the prescribed period of time (T_{sync}) elapses, wherein the voice samples are coded and decoded in the normal mode,
wherein the piece of identifier information (TRAU*) does not additionally comprise a piece of TRAU frame synchronisation information.

2. Method according to Claim 1, **characterized in that** the TRAU frames that are known from mobile radio systems are used for the signal parameters.

3. Method according to Claim 1 or 2, **characterized in that** the second data stream is used to transmit signal parameters for useful data reconstruction and/or for signalling.

4. Method according to Claim 3, **characterized in that** the first data stream consists of the more significant bits of a parallel bit sequence and the second data stream consists of the corresponding less significant bits of said bit sequence.

5. Method according to Claim 4, **characterized in that** the second data stream is formed by reducing the data of the first data stream.

6. Method according to Claim 4 or 5, **characterized in that** the more significant bits are transmitted as PCM samples.

7. Method according to one of Claims 1 to 6, **characterized in that** a piece of identifier information (TRAU*) is sent between the subscribers (TL1, TL2) instead of the signal parameters.

8. Method according to one of Claims 3 to 7, **characterized in that** in a time phase of connection set-up only the samples are sent and zero sequences are shown instead of the signal parameters.

9. Method according to Claim 8, **characterized in that** the zero sequences are shown before the piece of identifier information (TRAU*) in time.

10. Method according to one of Claims 1 to 9, **characterized in that** immediately after the sending of the piece of identifier information (TRAU*) the signal parameters in the TRAU frame are sent.

11. Method according to one of the preceding claims, **characterized in that** after the transition to the tandem-free transmission mode a periodic idle pattern (IDLE*) is sent instead of the samples to be coded.

12. Method according to one of Claims 7 to 11, **characterized in that** the termination of a connection or a transmission error is recorded by virtue of detection of the piece of TRAU frame synchronisation information and/or by virtue of inspection of the periodic IDLE pattern (IDLE*).

13. Method according to one of Claims 2 to 10, **characterized in that** the termination of a connection or a transmission error is recorded by virtue of detection of the piece of TRAU frame synchronisation information and/or by virtue of evaluation of a periodic pattern in the information of a modulo-n counter, the counter readings of which are transmitted within the first data stream.

14. Method according to one of Claims 11 to 13, **characterized in that** during connection set-up the second data stream is monitored to determine whether other bit combinations arrive instead of the zero sequences, and **in that** this monitoring is used to derive a trigger signal that - if need be after a delay - leads to the following method of operation by means of a switching centre (MSC) situated between the recoding devices (TCE1, TCE2):
- the switching centre (MSC) sends the idle patterns (IDLE*) if a transcoding device (TCR1, TCR2) is not in use,
- the switching centre (MSC), if need be, during connection set-up, first of all connects a loop between the input and the output of the line to the recoding device (TCE1, TCE2) before it connects through,
- if the switching centre (MSC) connects through at different speeds in the two directions, this is compensated for with the trigger signal.

15. Method according to one of Claims 11 to 13, **characterized in that** erroneous TRAU frames are replaced with previous TRAU frames by the counterpart station and if need be muting is initiated.

16. Method according to one of Claims 12 to 15, **characterized in that** a counter, Timer Tᵣₑₗₑₐₛₑ, is set when a connection is terminated, **in that** in the event of reception of a piece of identifier information (TRAU*) within a prescribed counting time, Tᵣₑₗₑₐₛₑ, a freshly connected recoding device (TCE3) maintains the tandem-free transmission mode, and **in that** if said piece of identifier information (TRAU*) is not received then a further piece of identifier information (TRAU*) is sent and the tandem-free transmission mode is terminated in the absence of synchronisation.

17. Method according to one of Claims 12 to 16, **characterized in that** the respective most recently sent data are buffer-stored and replace erroneous data for the purpose of error masking.

## Revendications

1. Procédé de transmission de données entre un abonné appelant (TL1), auquel est associé un premier dispositif de transcodage (TCE1), et un abonné appelé (TL2), auquel est associé un second dispositif de transcodage (TCE2),
dans lequel on utilise pour la transmission un format de trame prédéterminé comprenant les caractéristiques suivantes :
le flux de données entre les dispositifs de transcodage (TCE1, TCE2) est subdivisé en un premier flux de données comportant des échantillons vocaux destinés à être transmis et en un second flux de données comportant des paramètres de signalisation destinés à la reconstruction des données vocales, notamment des trames TRAU,
dans lequel les flux de données ainsi subdivisés sont transmis pendant une phase d'établissement de connexion,
dans lequel, lors d'un établissement de connexion entre les abonnés (TL1, TL2) une information d'identification (TRAU*) est émise pendant un intervalle de temps prédéterminé T_{sync} par le premier dispositif de transcodage (TCE1) et dans lequel le premier dispositif de transcodage (TCE1) revient dans le mode de fonctionnement normal lorsqu'il ne reçoit aucune information d'identification (TRAU*) en provenance du second dispositif de transcodage (TCE2) avant que l'intervalle de temps prédéterminé (T_{sync}) se soit écoulé, dans lequel, dans le mode de fonctionnement normal, les échantillons vocaux sont codés ou décodés,
dans lequel l'information d'identification (TRAU*) ne comprend aucune information de synchronisation de trames TRAU.

2. Procédé selon la revendication 1, **caractérisé en ce que**, pour les paramètres de signalisation, on utilise les trames TRAU connues des systèmes radio mobiles.

3. Procédé selon la revendication 1 ou 2, **caractérisé en ce que** des paramètres de signalisation destinés à la reconstruction des données utiles et/ou à la signalisation sont transmis dans le second flux de données.

4. Procédé selon la revendication 3, **caractérisé en ce que** le premier flux de données est constitué de bits de poids fort d'une séquence binaire parallèle et **en ce que** le second flux de données est constitué des bits de poids faible correspondants de cette séquence binaire.

5. Procédé selon la revendication 4, **caractérisé en ce que** le second flux de données est formé par réduction des données du premier flux de données.

6. Procédé selon la revendication 4 ou 5, **caractérisé en ce que** les bits de poids fort sont transmis en tant qu'échantillons PCM.

7. Procédé selon l'une quelconque des revendications 1 à 6, **caractérisé en ce qu'**au lieu des paramètres de signalisation, une information d'identification (TRAU*) est émise entre les abonnés (TL1, TL2).

8. Procédé selon l'une quelconque des revendications 3 à 7, **caractérisé en ce que** les échantillons ne sont émis qu'au cours d'une phase temporelle d'un établissement de connexion et **en ce que** des séquences nulles sont insérées au lieu des paramètres de signalisation.

9. Procédé selon la revendication 8, **caractérisé en ce que** les séquences nulles sont insérées temporellement avant les informations d'identification (TRAU*).

10. Procédé selon l'une quelconque des revendications 1 à 9, **caractérisé en ce que** les paramètres de signalisation sont émis dans des trames TRAU immédiatement après l'émission des informations d'identification (TRAU*).

11. Procédé selon l'une quelconque des revendications précédentes, **caractérisé en ce qu'**une configuration de repos périodique (IDLE*) est émise après le passage au mode de transmission non tandem au lieu des échantillons à coder.

12. Procédé selon l'une quelconque des revendications 7 à 11, **caractérisé en ce que** l'interruption d'une connexion ou une erreur de transmission est enregistrée par détection de l'information de synchronisation de trame TRAU et/ou par contrôle de la configuration de repos périodique (IDLE*).

13. Procédé selon l'une quelconque des revendications 2 à 10, **caractérisé en ce que** l'interruption d'une connexion ou une erreur de transmission est enregistrée par détection de l'information de synchronisation de trame et/ou par analyse de la configuration periodique de l'information d'un compteur modulo n dont les états de comptage sont transmis au sein du premier flux de données.

14. Procédé selon l'une quelconque des revendications 11 à 13, **caractérisé en ce que**, lors d'un établissement d'une connexion, le second flux de données est en outre soumis à une surveillance pour déterminer si d'autres combinaisons binaires apparaissent au lieu des séquences nulles, **en ce qu'**un signal de déclenchement est déterminé à partir de ladite surveillance, lequel signal de déclenchement conduit le cas échéant après un certain retard, au moyen d'un dispositif de commutation (MSC) se trouvant entre les dispositifs de transcodage (TCE1, TCE2), aux modes de fonctionnement suivantes :
- le dispositif de commutation (MSC) émet la configuration de repos (IDLE*) lorsqu'un dispositif de transcodage (TCR1, TCR2) n'est pas occupé ;
- le dispositif de commutation (MSC) commute tout d'abord, le cas échéant lors de l'établissement d'une connexion, une boucle entre l'entrée et la sortie de la ligne conduisant au dispositif de transcodage (TCE1, TCE2) avant de devenir passant,
- lorsque le dispositif de commutation (MSC) effectue une commutation rapide différente dans les deux directions, cela est comparé au signal de déclenchement.

15. Procédé selon l'une quelconque des revendications 11 à 13, **caractérisé en ce que** des trames TRAU erronées provenant des points distants sont remplacées par des trames TRAU précédentes et le cas échéant, **en ce qu'**un silence est introduit.

16. Procédé selon l'une quelconque des revendications 12 à 15, **caractérisé en ce que**, lors de l'interruption d'une connexion, un compteur, ou un temporisateur Tᵣₑₗₑₐₛₑ, est positionné, **en ce que**, dans le cas de la réception d'une information d'identification (TRAU*) au cours d'un intervalle de temps Tᵣₑₗₑₐₛₑ prédéterminé, le mode de transmission non tandem est maintenu par un dispositif de transcodage (TCE3) nouvellement mis en circuit, **en ce que**, lors de la non-réception de ladite information d'identification (TRAU*), une autre information d'identification (TRAU*) est émise et le mode de transmission non tandem est interrompu lors d'une erreur de synchronisation.

17. Procédé selon l'une quelconque des revendications 12 à 16, **caractérisé en ce que** les données respectives émises en dernier sont mises en mémoire tampon et sont substituées à des données erronées à des fins de masquage d'erreur.
